# EUROPEAN PATENT APPLICATION

(11) **EP 4 657 779 A1**
(43) Date of publication of application: **03.12.2025**
(21) Application number: 24178788.6
(22) Date of filing: 29.05.2024
(51) Int. Cl.: H04L 1/00, H04W 4/80, H04B 1/713, H04B 1/715, H04W 84/18

(54) **METHOD FOR ADJUSTING A COMMUNICATION PARAMETER IN A BLE COMMUNICATION NETWORK**

(71) Applicant: DEWINE Labs GmbH, 8010 Graz (AT)
(72) Inventor: HOFMANN, Rainer, 8042 Graz (AT); SPÖRK, Michael, 8010 Graz (AT)
(74) Representative: Weiser Voith Gugler Patentanwälte Partnerschaft

(57) **Abstract**

The present invention relates to a method (9) for adjusting a communication parameter (7) in a Bluetooth Low Energy, BLE, communication network (1), the communication parameter being one of a transmit power (T), a data packet timing (t_{dp}), a maximum data packet length (Lₘₐₓ), a set (S) of frequency channels (Chⱼ) for frequency hopping and a physical modulation (PHY), the method comprising: by a second node, determining (11) at least one radio metric (RM) from a group (G) consisting of a local received signal strength (R), a local noise level (N), a local transmit power (T), a local data packet timing (t_{dp}), a local data packet length (L) and a local data packet error rate (E), and transmitting (12) the same to the first node; and by a first node, receiving the transmitted radio metric and adjusting (14) the communication parameter on the basis of the received radio metric.

## Description

The present invention relates to a method for adjusting a communication parameter in a Bluetooth Low Energy, BLE, communication network having a first node and a second node communicating via a first BLE link, the communication parameter being one of a transmit power, a data packet timing, a maximum data packet length, a set of frequency channels for frequency hopping and a physical modulation.

The BLE specification provides for a set of (currently) up to forty narrowband frequency channels in the 2.4 GHz ISM band which may be used for exchanging data packets between nodes in each of successive communication intervals, see, e.g., the Bluetooth Core Specification, Version 5.4 prepared by the Core Specification Working Group. However, in many situations, some of these frequency channels suffer from bad quality, e.g., due to weak received signal strength caused by too low transmit power used by a transmitting node, multipath fading caused by stray reflections of a transmitted signal, and/or interference with other wireless devices using the 2.4 GHz ISM band, e.g., frequencies of classic Bluetooth, Wi-Fi, ZigBee, ANT, microwave, etc. On the one hand, using a frequency channel of bad quality or, likewise, improper data packet timing impairs throughput, communication range, transmission latency, etc. On the other hand, using an unnecessarily high transmit power, an unnecessarily short maximum data packet length or an unnecessarily robust physical modulation for a frequency channel of good quality impairs energy efficiency.

To improve the quality of a BLE link, the BLE specification provides for, inter alia, frequency hopping, wherein communicating nodes change the frequency channel for each of subsequent communication intervals to mitigate the effects of individual bad quality frequency channels. When frequency channels are known to suffer from bad quality, they may be temporarily removed from the set of frequency channels ("blacklist-ed" or "blocklisted") and added again ("whitelisted" or "allowlisted") later, e.g., after a predetermined period or when their quality has increased. Frequency hopping with such an adjustment of the set of frequency channels is known in the art as "adaptive frequency hopping".

Many approaches for frequency channel management on the basis of data available locally at a node have been proposed, e.g., by M. Spörk et al. "Improving the Reliability of Bluetooth Low Energy Connections", Proceedings of the 2020 International Conference on Embedded Wireless Systems and Networks, pp. 144 - 155, utilising local noise floor, local signal-to-noise ratio and packet delivery ratio measured at a central node to blacklist frequency channels of bad quality.

However, current approaches for adjusting the communication parameters in a BLE communication network still suffer from shortcomings. For instance, in some cases, frequency channels of bad quality, insufficiently low or unnecessarily high transmit power or maximum data packet length, physical modulation with high throughput but insufficiently low robustness or with unnecessarily high robustness but little throughput, and/or wrong data packet timing remain being used, which results in BLE communication of lower than necessary energy efficiency, throughput and communication range and/or high transmission latency.

It is an object of the present invention to provide a method which allows for a more accurate communication parameter adjustment in a BLE communication network.

This object is achieved with a method as described in the outset, which is distinguished in that it comprises
by the second node, determining at least one radio metric from a group consisting of a local received signal strength, a local noise level, a local transmit power, a local data packet timing, a local data packet length and a local data packet error rate, and transmitting the determined at least one radio metric to the first node; and
by the first node, receiving the transmitted at least one radio metric and adjusting the communication parameter for the first BLE link on the basis of the received at least one radio metric.

The method of the invention breaks with the paradigm to utilise only radio metrics that are locally available at that node which adjusts the communication parameter. Instead, the node adjusts the communication parameter for the BLE link more accurately by utilising a radio metric determined by at least one other node.

To this end, the second node determines one or more radio metrics from said group and transmits the same to the first node which, in turn, adjusts the communication parameter for the first BLE link on the basis of the radio metric transmitted by the second node. As the second node - by transmitting the radio metric - at least implicitly provides information about its local setting or environment, the first node has non-local data available for adjusting the communication parameter in a more accurate way to increase energy efficiency, throughput and communication range and/or to reduce transmission latency for the first BLE link.

In a beneficial embodiment, the method further comprises: by the first node, determining at least one radio metric from said group; wherein, in said step of adjusting, the first node adjusts the communication parameter also on the basis of the at least one radio metric determined by the first node. Thereby, the first node utilises both the non-local radio metric determined by the second node and the local radio metric determined by itself to adjust the communication parameter even more accurately or faster.

In a first variant of this embodiment, in said step of determining, the first and second nodes determine the respective at least one radio metric for one and the same subset of frequency channels of the set. Thus, the first node collects local and non-local radio metrics for said subset of frequency channels to adjust the communication parameter particularly accurately.

In a second variant of this embodiment, in said step of determining, the first and second nodes determine the respective at least one radio metric for different subsets of frequency channels of the set. Thus, the first and second nodes share the effort for determining the radio metrics for the frequency channels of the subset.

In some embodiments, the at least one radio metric is determined for all of the frequency channels for which the communication parameter is adjusted.

In other embodiments, the at least one radio metric is determined for some frequency channels and estimated, e.g., interpolated or extrapolated, for other frequency channels for which no radio metric has been determined either recently or at all and the communication parameter is adjusted for said some and said other frequency channels. Thus, the communication parameter can be adjusted very fast and efficiently for a large number of frequency channels. Such an estimation works particularly well in the presence of broadband interference which affects several neighbouring frequency channels similarly, e.g., interference caused by other wireless devices using broader frequency channels than BLE.

In a first favourable embodiment thereof, in said step of determining, the at least one radio metric is determined for a lowest and a highest frequency channel of a subset of at least three and at most ten neighbouring frequency channels of the set, and, in said step of adjusting, the first node evaluates whether the determined radio metrics for the lowest and highest frequency channels are similar and, if so, adjusts the communication parameter for all the frequency channels of said subset in the same way. Thereby, intermediate frequency channels of said subset are considered similar to the lowest and highest frequency channels ("interpolated") to adjust the communication parameter fast and efficiently for said subset.

In a second favourable embodiment thereof, in said step of determining, the at least one radio metric is determined for three neighbouring frequency channels, two frequency channels of which being included in a subset of at least three and at most ten neighbouring frequency channels of the set and a third frequency channel of which not being included in this subset, and, in said step of adjusting, the first node evaluates whether the determined radio metrics for said two neighbouring frequency channels are similar to one another and not similar to the third frequency channel and, if so, adjusts the communication parameter for all the frequency channels of said subset in the same way. Thereby, the similarity of the two frequency channels and their dissimilarity with the third frequency channel indicates an onset, e.g., of broadband interference which is assumed to affect all frequency channels of the subset. Thus, the other frequency channels of said subset are considered similar to said two frequency channels ("extrapolated") to adjust the communication parameter fast and efficiently for said subset.

The similarity of radio metrics for two frequency channels may be determined in a number of ways employing one of a plurality of similarity metrics.

In one embodiment, in said step of determining, the local noise level is determined, and, in said step of adjusting, the first node evaluates whether the determined radio metrics for the respective two frequency channels are similar by evaluating whether the local noise levels determined for the respective two frequency channels exceed a predetermined noise level threshold value. In this way, the similarity can be evaluated particularly fast and efficiently by making use of the fact that interference by broadband wireless devices generally causes high noise levels in several neighbouring frequency channels including the respective two frequency channels.

In an alternative embodiment, in said step of determining, the evolution of the local noise level over time is determined, and, in said step of adjusting, the first node evaluates whether the determined radio metrics for the respective two frequency channels are similar by evaluating whether the evolutions of the local noise levels over time determined for the respective two frequency channels are similar. The similarity can be evaluated particularly accurately according to this embodiment as an interference by broadband wireless devices causes similar evolutions of the local noise levels over time for all affected frequency channels.

Any local noise level may be determined in the comparatively long time interval between two consecutive communication intervals. In a beneficial embodiment, however, in said step of determining, the local noise level is determined - exclusively or additionally - in at least one BLE Frame Spacing. The BLE Frame Spacing (FS) is a mandatory short pause between consecutive data packets transmitted over the BLE link during each communication interval. It serves to avoid collisions when multiple nodes transmit data simultaneously, to allow for a change from receiving to transmitting and vice versa, to improve energy efficiency by reducing unnecessary re-/transmissions of packets and to synchronise transmitting and receiving nodes as they are aware of when the next packet is expected, aiding in proper reception and decoding of data. Utilising the mandatory BLE FS to determine the local noise level has several advantages:
Firstly, determining the local noise level within a communication interval allows to adjust the communication parameter already during the same communication interval. For instance, when a high noise level is determined for the frequency channel used in that communication interval, the first node may, already during this communication interval, increase its transmit power or instruct the second node to do so in order to increase throughput. On the other hand, when a low noise level is determined for the frequency channel used in that communication interval, the first node may, already during this communication interval, lower its transmit power or instruct the second node to do so to increase energy efficiency.

Secondly, determining the local noise level in a BLE FS, i.e. right after the transmission or reception of a data packet, allows to capture and take into account noise due to multipath fading caused by stray reflections of a transmitted signal. Thus, the local noise level can be determined and the communication parameter can be adjusted particularly accurately.

Thirdly, the BLE FS is a time interval during which no BLE data packets are expected. Hence, the probability of mistaking a BLE data packet of another BLE node for the local noise level is reduced.

Fourthly, determining the local noise level several times in subsequent BLE FSs allows for resolving the evolution of the local noise level accurately over time.

Fifthly, external interference can be easily detected by a failure of data packet reception and a high local noise level in the BLE FS, and, thus, accounted for when adjusting the communication parameter.

Sixthly, determining the local noise level in the BLE FS does not impact throughput and latency of the BLE communication as the mandatory FS is not used for data packet exchanges.

The BLE communication network may (and often will) have more than two nodes, e.g. three, four, five or more nodes. For example, in an advantageous embodiment, the BLE communication network further has a third node communicating with the first node via a second BLE link, and, in said step of adjusting, the first node evaluates whether the second and third nodes fulfil a given proximity criterion and, if so, adjusts the communication parameter for both the first and second BLE links in the same way. Thereby, information about the second node's local environment - in which the third node is located when it fulfils the proximity criterion - is used to adjust the communication parameter of both the first and second BLE links together and, thus, particularly efficiently.

Preferably, the aforementioned embodiment further comprises: by the third node, determining at least one radio metric from said group and transmitting the determined at least one radio metric to the first node; wherein the first node, in said step of receiving, also receives the at least one radio metric transmitted by the third node and, in said step of adjusting, adjusts the communication parameter also on the basis of the at least one radio metric received from the third node. In this embodiment, the communication parameter for the first and second BLE links are adjusted particularly accurately on the basis of the radio metrics determined by the second and third nodes (and, optionally, also on the basis of the at least one radio metric determined by the first node as described above).

The proximity criterion may be any criterion defining a spatial proximity, e.g., whether the second and third nodes are within a certain distance from one another, from the first node, from a further node or from another wireless device, whether they are neighbouring nodes, in a certain region, etc. The first node may evaluate the fulfilment of the proximity criterion in many ways and based on any explicit or implicit spatial information be it given or determined by one or more nodes, e.g., by means of a location algorithm such as trilateration, multilateration, RSSI-based localisation, angle of arrival, channel sounding, etc.

In a preferable embodiment, in said step of determining, each of the second and third nodes determines the local noise level, and, in said step of adjusting, the first node evaluates whether the local noise levels determined by the second and third nodes are similar and, if so, concludes that the proximity criterion is fulfilled. In this embodiment, the proximity can be evaluated particularly fast and efficiently by means of easily determined local noise levels.

In a beneficial variant of this embodiment, in said step of determining, the second and third nodes determine the evolution of the local noise level over time and/or the local noise level for one and the same subset of at least two, preferably at least three, frequency channels of the set, and, in said step of adjusting, the first node evaluates whether the evolutions of the local noise levels over time and/or the local noise levels for said one and the same subset of frequency channels are similar and, if so, concludes that the proximity criterion is fulfilled. Thereby, the proximity of the second and third nodes is evaluated particularly accurately.

In another preferable embodiment, the method comprises: by one of the second and third nodes, determining a local received signal strength and/or a local data packet timing of a data packet transmitted by the other one of the second and third nodes, identifying a proximity indicator therefrom, and transmitting the determined proximity indicator to the first node; wherein, in said step of receiving, the first node receives the proximity indicator and, in said step of adjusting, evaluates whether the proximity indicator indicates that the proximity criterion is fulfilled. Each of the local received signal strength and the local data packet timing of a data packet transmitted by one of the second and third nodes and obtained by the other one of the second and third nodes is a direct indication of the proximity of the second and third nodes and, hence, may be transmitted as a proximity indicator directly or in a processed form to the first node for evaluating the spatial proximity of the second and third nodes therefrom fast and efficiently.

Advantageously, in each of the abovementioned embodiments and variants the first node is a central node and each other node is a peripheral node. In this way, the typically higher computation power of the central node is utilised to adjust the communication parameter fast and accurately.

The invention will now be described by means of exemplary embodiments thereof with reference to the enclosed drawings, in which show:
Fig. 1 a Bluetooth Low Energy (BLE) communication network having a first and a second node communicating via a first BLE link, in a schematic top view;
Fig. 2 a set of frequency channels used by the first and second nodes of Fig. 1 for frequency hopping, in a diagram over frequency;
Fig. 3 a local signal power in the second node of Fig. 1 for two exemplary communication intervals using two frequency channels of Fig. 2 in succession, in a diagram of signal power over time;
Fig. 4 a table of communication parameters used for the first BLE link of Fig. 1;
Fig. 5 a first embodiment of a method for adjusting at least one communication parameter of Fig. 4 carried out by the first and second nodes of Fig. 1, in a flow diagram;
Fig. 6 a local noise level determined by the second node or the first and second nodes of Fig. 1 for two frequency channels of said set of Fig. 2, in a diagram of local noise level over frequency;
Fig. 7 a local noise level determined by the second node or the first and second nodes of Fig. 1 for three neighbouring frequency channels of said set, in a diagram of local noise level over frequency;
Fig. 8 local noise levels determined by the second node or the first and second nodes of Fig. 1, each for a respective frequency channel of the set of Fig. 2 in a respective diagram of local noise level over time;
Fig. 9 the Bluetooth Low Energy (BLE) communication network of Fig. 1 further having a third node communicating with the first node via a second BLE link and a fourth node communicating with the first node via a third BLE link, in a schematic top view;
Fig. 10 a local signal power in the first node of Fig. 9 for two exemplary communication intervals in a one-to-one communication scenario, in a diagram of signal power over time;
Fig. 11 a local signal power in the first node of Fig. 9 for two exemplary communication intervals in a broadcast communication scenario, in a diagram of signal power over time;
Fig. 12 a second embodiment of a method for adjusting at least one communication parameter carried out by the first, second and third nodes of Fig. 9, in a flow diagram;
Fig. 13 local noise levels determined by the second and third nodes of Fig. 9, respectively, each in a diagram of local noise level over time; and
Fig. 14 local noise levels determined by the second and third nodes of Fig. 9, respectively, each in a diagram of local noise level over frequency.

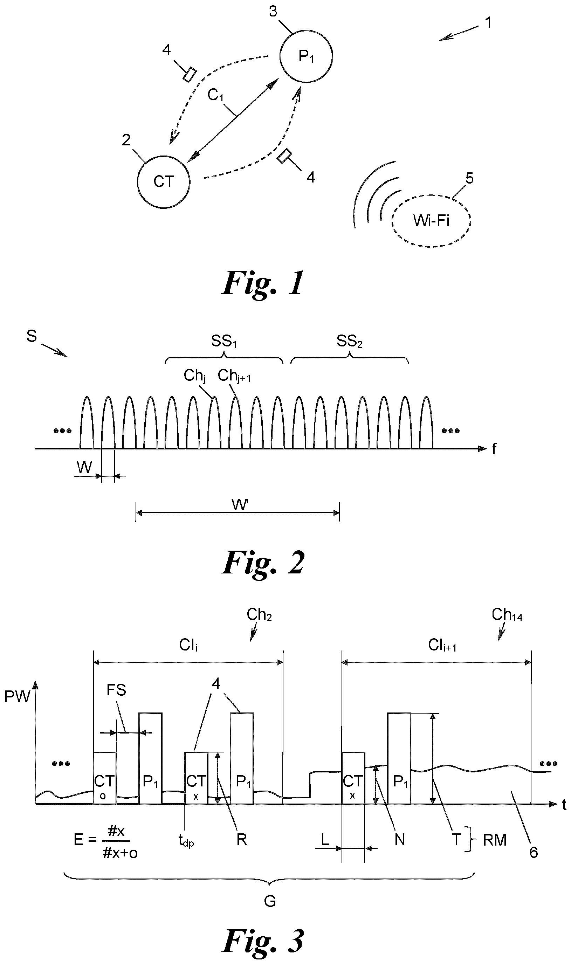

Fig. 1 shows a Bluetooth low energy (BLE) communication network 1 which has (at least) a first node 2 (here: a central node CT, alternatively a peripheral node) and a second node 3 (here: a peripheral node P₁). The first and second nodes 2, 3 communicate via a first BLE link C₁ according to a BLE specification such as the Bluetooth Core Specification prepared by the Core Specification Working Group. Herein, a "BLE link" may be any type of link or connection between two BLE nodes, e.g. a so-called "BLE connection", a connection for "Periodic Advertising with Responses (PAwR)", etc.

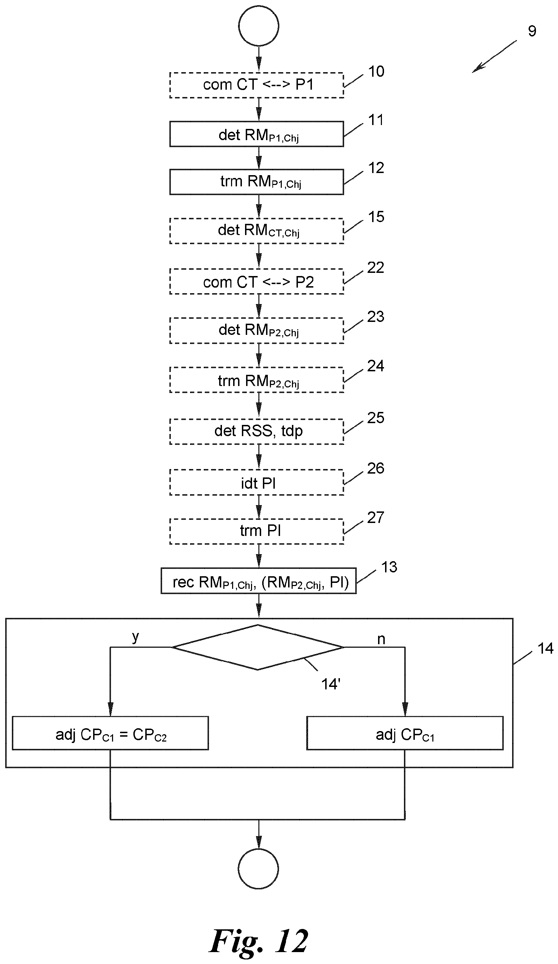

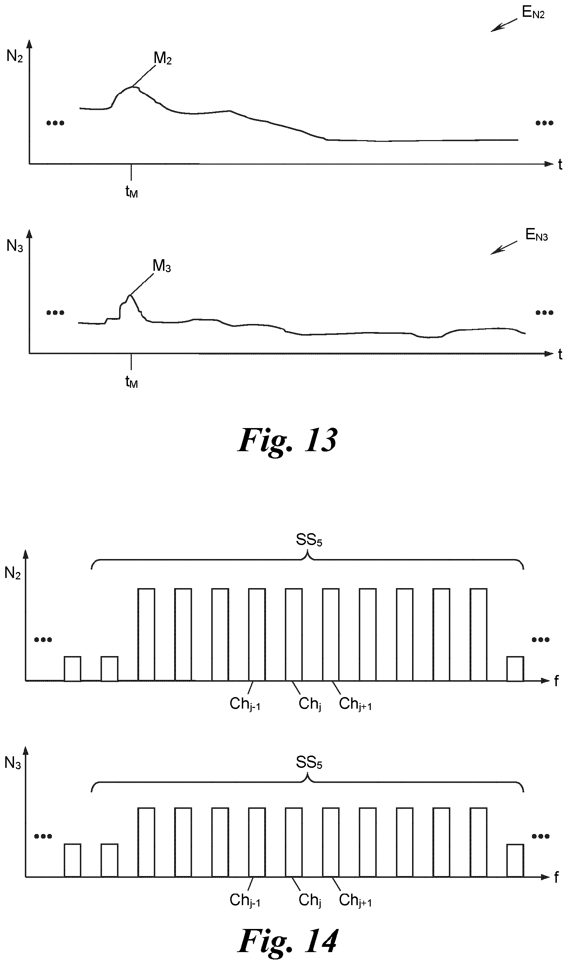

In the course of a typical communication, the first and second nodes 2, 3 exchange data packets 4 in each of successive communication intervals CI₁, CI₂, ..., generally CIᵢ (Fig. 3). The communication intervals CIᵢ may be so-called "connection intervals" (likewise "connection events"), e.g. in case of a BLE one-to-one communication (Fig. 3 and 12), or so-called "periodic advertising intervals" or "periodic advertising subevent intervals" (likewise "advertising events" or "advertising subev-ents"), e.g. in case of a BLE broadcast communication (Fig. 13), for instance in PAwR.

Fig. 2 depicts a set S of up to forty frequency channels Ch₁, Ch₂, ..., generally Chⱼ, in the 2.4 GHz Industrial, Scientific and Medical ("ISM") band provided by the BLE specification for communicating, three of which being typically used for so called scanning and advertising when establishing a BLE link. Each frequency channel Chⱼ has a given channel width W of typically 2 MHz. In some situations, at least some of these frequency channels Chⱼ suffer from a bad quality, e.g., due to a too low transmit power T (Fig. 3) used during transmitting by one of the nodes 2, 3, multipath fading caused by stray reflections of a transmitted signal, and/or interference with other wireless devices using the 2.4 GHz ISM band, e.g., a WI-FI device 5 (Fig. 1) using a channel width W' of typically 20 or 40 MHz.

It is noted that the present disclosure may likewise be utilised for a different number of frequency channels Chⱼ, width W of frequency channels Chᵢ and/or for a different frequency band used by BLE, e.g., a 5 GHz band in the future.

To reduce the usage of a frequency channel Chⱼ which has a bad quality, the first and second nodes 2, 3 use frequency hopping, wherein they change the used frequency channel Chⱼ for each of subsequent communication intervals CIᵢ, CIᵢ₊₁. Fig. 3 illustrates such frequency hopping exemplarily in a diagram of signal power PW in the second node 3 over time t for two successive communication intervals CIᵢ, CIᵢ₊₁. In this example, frequency channel Ch₂ is used to exchange four data packets 4 between the first and second nodes 2, 3 in the first communication interval CIᵢ and frequency channel Ch₁₄ is used to exchange two data packets 4 between the first and second nodes 2, 3 in the second communication interval CIᵢ₊₁.

As can be seen in Fig. 3, the second node 3 transmits its data packets 4 (denoted 'P₁') with a transmit power T and receives the data packets 4 from the first node 2 (denoted 'CT') with a received signal strength R, e.g., measured as a received signal strength indicator (RSSI), and with a data packet length L which may be a length in time or in bits. Each data packet 4 is transmitted or received at a certain data packet timing t_{dp} which may be an absolute time or a time difference with respect to an expected anchor point in time. Some of the received data packets 4 are received without an error and can be fully read (indicated by "o") and others are received with an error and cannot be fully read (indicated by "x"). An error rate E indicates the amount of erroneous data packets 4 and may be, e.g., computed by dividing the number of erroneous data packets 4 (denoted by "#x") by the total number of data packets 4 (denoted by "#x+o").

The desired signals are superposed by noise 6 having a noise level N that typically differs for different frequency channels Chⱼ and changes over time. In the example of Fig. 3, the noise level N is higher for frequency channel Ch₁₄ than for frequency channel Ch₂ as the former is affected by the nearby WI-FI device 5.

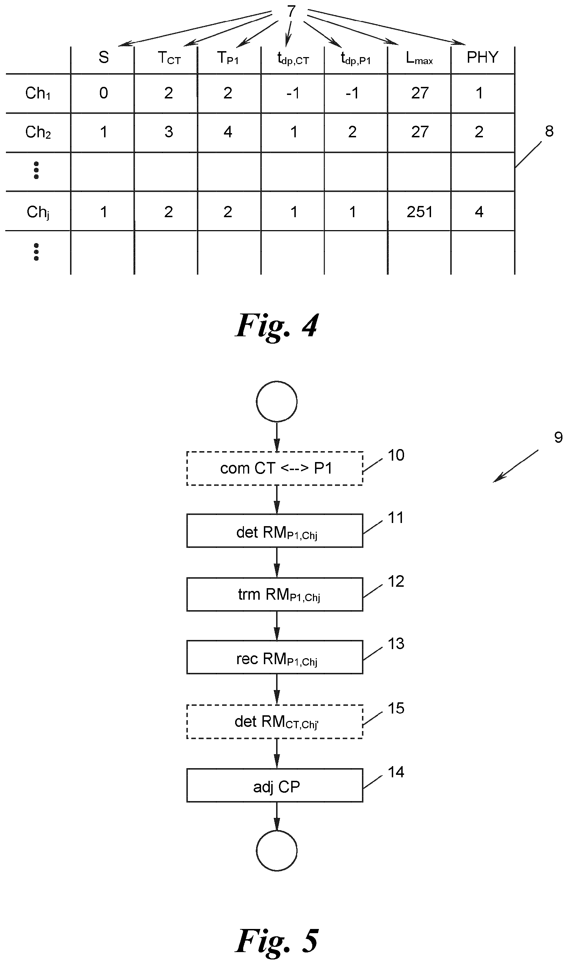

To adapt the communication to different channel qualities, one or more communication parameters 7 of the first BLE link C₁, i.e. (i) the transmit power T, (ii) the data packet timing t_{dp}, (iii) a maximum data packet length Lₘₐₓ, (iv) the set S of frequency channels Chⱼ used for frequency hopping, and/or (v) a physical modulation PHY may be adjusted for one, several or all frequency channels Chⱼ as shall now be explicated with reference to Fig. 4.

Fig. 4 depicts an exemplary table 8 which holds, for the first BLE link C₁, in the first column the set S of frequency channels Chⱼ. Therein, '1' identifies those frequency channels Chⱼ that are currently in the frequency set S and, thus, used for frequency hopping and '0' identifies the other channels Chⱼ. In the second and third columns, table 8 holds the transmit power T for the first node 2 ('T_{CT}') and for the second node 3 ('T_{P1}') in the respective frequency channel Chⱼ, wherein higher numbers in the table 8 indicate higher transmit power T; in the fourth and fifth columns, table 8 holds the data packet timing t_{dp} for the first node 2 ('t_{dp,C1}') and for the second node 3 ('t_{dp,P1}'), respectively, wherein higher numbers for the data packet timing t_{dp} indicate a later transmission of data packets 4 and lower numbers an earlier transmission of data packets 4. In the sixth column, table 8 holds a maximum data packet length Lₘₐₓ which may be a maximum length in time or in bits (in Fig. 4: in bytes). In the seventh column, table 8 holds the physical modulation PHY which is the type of modulation used, e.g., LE 1M PHY (type '1'), LE 2M PHY (type '2'), LE Coded PHY S=8 (type '3'), LE Coded PHY S=2 (type '4'), or the like known in the art. It is noted that the transmit power T, the data packet timing t_{dp}, the maximum data packet length Lₘₐₓ and the physical modulation PHY may be different or the same for the first and second nodes 2, 3, i.e., they may be but need not be node-specific.

With reference to Fig. 5, a method 9 for adjusting one or more of the communication parameters 7 shall now be described.

In an optional (dashed) first step 10 of the method 9, the communication between the first and second nodes 2, 3, i.e. the first BLE link C₁ is established as known in the art.

In a second step 11 of the method 9, the second node 3 determines at least one radio metric RM from a group G consisting of the local received signal strength R, the local noise level N, the local transmit power T, the local data packet timing t_{dp}, the local data packet length L and the local data packet error rate E (Fig. 3). This is generally done for the frequency channel Chⱼ used in the current communication interval CIᵢ. Optionally, it can be done for one frequency channel Chⱼ for several communication intervals Chᵢ using that frequency channel Chⱼ. It can additionally be done for several (or even all) frequency channels Chⱼ of the set S used in several communication intervals CIᵢ. In some cases, radio metrics RM may even be determined for frequency channels Chⱼ not used in the several communication intervals CIᵢ, e.g., by an interpolation or extrapolation described below. Thus, each radio metric RM determined by the respective node may (and typically will) depend on the particular frequency channel Chⱼ, which is depicted by the subscript in Fig. 5, e.g. 'RM_{P1,Chj}' for the radio metric RM determined by the second node 3 ('P1') for the frequency channel Chⱼ.

In a third step 12 of the method 9, the second node 3 transmits the determined at least one radio metric RM to the first node 2, e.g., in one or more data packets 4 transmitted in one or more communication intervals CIᵢ.

In a fourth step 13 of the method 9, the first node 2 receives the transmitted at least one radio metric RM from the second node 3, e.g., in said one or more data packets 4.

In a fifth step 14 of the method 9, the first node 2 adjusts at least one of said communication parameters 7 for the first BLE link C₁ on the basis of the received at least one radio metric RM, i.e. on the basis of a radio metric RM determined locally by the second node 3 not by the first node 2 such that the received at least one radio metric RM is non-local to the first node 2.

Many combinations of determining one or more radio metrics RM of said group G in step 11 and adjusting one or more communication parameters 7 in step 14 on the basis thereof are possible, for instance one of the following embodiments which can optionally be combined:
According to a first example, the second node 3 determines (step 11) the local received signal strength R for one or more frequency channels Chⱼ, i.e. the currently used (alternatively: several or even all) frequency channel/s Chⱼ, and transmits the same to the first node 2 (step 12) which receives the same (step 13).

In one variant of the first example, the first node 2 evaluates, in step 14, for each of said one or more frequency channels Chⱼ whether the received signal strength R received in step 13 for that frequency channel Chⱼ is low, e.g., below a given first received signal strength threshold, and, if so, adjusts the communication parameter/s 7 by increasing the transmit power T of the first node 2 ('T_{CT}' in Fig. 4) and/or of the second node 3 ('T_{P1}' in Fig. 4) for that frequency channel Chⱼ, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY, e.g. to LE Coded PHY S=8 or S=2, for that frequency channel Chⱼ. Generally, each of these adjustments may be used exclusively or at least some of them in combination. For example, the transmit power T for a respective frequency channel Chⱼ may be increased when the transmit power T is below a transmit power threshold, otherwise this frequency channel Chⱼ may be removed from the set S. Likewise, a respective frequency channel Chⱼ may be removed from the set S when the set S currently includes more than a given number of frequency channels Chⱼ, otherwise the transmit power T for this frequency channel Chⱼ may be increased, etc.

For instance, in the example of Fig. 4, the first frequency channel Ch₁ is (e.g. temporarily) removed ("blocklisted" as indicated by '0') from the set S of frequency channels Chⱼ. This frequency channel Ch₁ may be added again ("allowlisted"), e.g. after a predetermined period of time is elapsed or when its quality has increased again, for instance, in a probing communication interval CIᵢ. Accordingly, the set S of frequency channels Chⱼ is adaptive.

Of course, for increasing the transmit power T of the second node 3, the first node 2 has to instruct the second node 3 to comply, which is, e.g., depicted by the higher number '4' in exemplary table 8 of Fig. 4 in order to increase transmit power T_{P1} of the second node 3 in frequency channel Ch₂. This applies, likewise, to the data packet timing t_{dp} for transmitting data packets 4 by the second node 3, to removing one or more frequency channels Chⱼ from the set S, to decreasing the maximum data packet length Lₘₐₓ and to changing the physical modulation PHY used by the second node 3.

In an alternative or additional variant of the first example, the first node 2 evaluates, in step 14, for each of said one or more frequency channels Chⱼ whether the received signal strength R received in step 13 for that frequency channel Chⱼ is high, e.g., above a given second received signal strength threshold, and, if so, adjusts the communication parameter/s 7 by decreasing the transmit power T of the first node 2 and/or of the second node 3 for that frequency channel Chⱼ, by increasing the maximum data packet length Lₘₐₓ of the first node 2 and/or of the second node 3 for that frequency channel Chⱼ, or by changing to a higher throughput physical modulation PHY, e.g. to LE 1M PHY or LE 2M PHY, for that frequency channel Chⱼ.

According to a second example, the second node 3 determines (step 11) the local noise level N for one or more frequency channels Chⱼ and transmits the same to the first node 2 (step 12) which receives the same (step 13).

In one variant of the second example, the first node 2 evaluates in step 14 for each of said one or more frequency channels Chⱼ whether the local noise level N received in step 13 for that frequency channel Chⱼ is high, e.g., above a given first noise level threshold, and, if so, adjusts the communication parameter/s 7 by increasing the transmit power T of the first node 2 and/or of the second node 3 for that frequency channel Chⱼ, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY for that frequency channel Chⱼ, e.g., as described above.

In an alternative or additional variant of the second example, the first node 2 evaluates in step 14 for each of said one or more frequency channels Chⱼ whether the local noise level N received in step 13 for that frequency channel Chⱼ is low, e.g., below a given second noise level threshold, and, if so, adjusts the communication parameter/s 7 by decreasing the transmit power T of the first and/or second node 2 for that frequency channel Chⱼ, by increasing the maximum data packet length Lₘₐₓ of the first node 2 and/or of the second node 3 for that frequency channel Chⱼ, or by changing to a higher throughput physical modulation PHY for that frequency channel Chⱼ.

According to a third example, the second node 3 determines (step 11) the local transmit power T for one or more frequency channels Chⱼ and transmits the same to the first node 2 (step 12) which receives the same (step 13).

In one variant of the third example, the first node 2 evaluates in step 14 for each of said one or more frequency channels Chⱼ whether the local transmit power T received in step 13 is low, e.g., below a given first transmit power threshold and, if so, adjusts the communication parameter/s 7 by instructing the second node 3 to increase the transmit power T for that frequency channel Chⱼ, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY for that frequency channel Chⱼ.

In an alternative or additional variant of the third example, the first node 2 evaluates in step 14 for each of the one or more frequency channels Chⱼ whether the local transmit power T received in step 13 is high, e.g., above a given second transmit power threshold and, if so, adjusts the communication parameter/s 7 by instructing the second node 3 to decrease the transmit power T for that frequency channel Chⱼ, by increasing the maximum data packet length Lₘₐₓ of the first node 2 and/or of the second node 3 for that frequency channel Chⱼ, or by changing to a higher throughput physical modulation PHY for that frequency channel Chⱼ.

According to a fourth example, the second node 3 determines (step 11) the local data packet timing t_{dp} for one or more frequency channels Chⱼ, which may either be the data packet timing t_{dp} for transmitting its own data packets 4 or for receiving the data packets 4 of the first node 2 or both, and transmits the same to the first node 2 (step 12) which receives the same (step 13).

In one variant of the fourth example, the first node 2 evaluates in step 14 for each of said one or more frequency channels Chⱼ whether the data packet timing t_{dp} received in step 13 for that frequency channel Chⱼ indicates a delayed data packet timing t_{dp} and, if so, adjusts the communication parameter/s 7 either by shifting the data packet timing t_{dp} for transmission of the first node 2 ('t_{dp,CT}' in Fig. 4) and/or of the second node 3 ('t_{dp,P1}' in Fig. 4) to earlier times or by removing that frequency channel Chⱼ from the set S, e.g., as described above.

In an alternative or additional variant of the fourth example, the first node 2 evaluates in step 14 for each of said one or more frequency channels Chⱼ whether the data packet timing t_{dp} received in step 13 for that frequency channel Chⱼ indicates a too early data packet timing t_{dp} and, if so, adjusts the communication parameter/s 7 by shifting the data packet timing t_{dp} for transmission of the first node 2 and/or of the second node 3 to later times for that frequency channel Chⱼ.

According to a fifth example, the second node 3 determines (step 11) the local data packet length L for one or more frequency channels Chⱼ and transmits the same to the first node 2 (step 12) which receives the same (step 13).

In one variant of the fifth example, the first node 2 evaluates in step 14 for each of said one or more frequency channels Chⱼ whether the local data packet length L received in step 13 for that frequency channel Chⱼ is too short, e.g., below a given first data packet length threshold, and, if so, adjusts the communication parameter/s 7 by increasing the transmit power T of the first node 2 and/or of the second node 3 for that frequency channel Chⱼ, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY for that frequency channel Chⱼ, e.g., as described above.

In an alternative or additional variant of the fifth example, the first node 2 evaluates in step 14 for each of said one or more frequency channels Chⱼ whether the data packet length L received in step 13 for that frequency channel Chⱼ is sufficiently long, e.g., above a given second data packet length threshold, and, if so, adjusts the communication parameter/s 7 by decreasing the transmit power T of the first node 2 and/or of the second node 3 for that frequency channel Chⱼ, e.g., to adjust a lowest possible transmit power T required for exchanging full length data packets 4, by increasing the maximum data packet length Lₘₐₓ of the first node 2 and/or of the second node 3 for that frequency channel Chⱼ, or by changing to a higher throughput physical modulation PHY for that frequency channel Chⱼ.

According to a sixth example, the second node 3 determines (step 11) the local data packet error rate E for one or more frequency channels Chⱼ and transmits the same to the first node 2 (step 12) which receives the same (step 13).

In one variant of the sixth example, the first node 2 evaluates in step 14 for each of said one or more frequency channels Chⱼ whether the data packet error rate E received in step 13 for that frequency channel Chⱼ is too high, e.g., above a given first data packet error rate threshold, and, if so, adjusts the communication parameter/s 7 by increasing the transmit power T of the first node 2 and/or of the second node 3 for that frequency channel Chⱼ, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY for that frequency channel Chⱼ, e.g., as described above.

In an alternative or additional variant of the sixth example, the first node 2 evaluates in step 14 for each of said one or more frequency channels Chⱼ whether the data packet error rate E received in step 13 for that frequency channel Chⱼ is sufficiently low, e.g., below a given second data packet error rate threshold, and, if so, adjusts the communication parameter/s 7 by decreasing the transmit power T of the first node 2 and/or of the second node 3 for that frequency channel Chⱼ, e.g., to adjust a lowest possible transmit power T required for exchanging data packets 4, by increasing the maximum data packet length Lₘₐₓ of the first node 2 and/or of the second node 3 for that frequency channel Chⱼ, or by changing to a higher throughput physical modulation PHY for that frequency channel Chⱼ.According to further examples, the second node 3 determines (step 11) two or more radio metrics RM from said group G for one or more frequency channels Chⱼ and transmits the same to the first node 2 (step 12) which receives the same (step 13). The first node 2, in turn, combines these received radio metrics RM and adjusts the one or more communication parameters 7 on the basis of this combination of received radio metrics RM.

As shown in Fig. 5, the method 9 optionally comprises, prior to step 14, a sixth step 15 in which also the first node 2 determines at least one radio metric RM from said group G, i.e. one of said local received signal strength R, local noise level N, local transmit power T, local data packet timing t_{dp}, local data packet length L and local data packet error rate E, wherein "local" refers to the first node 2. Then, in said step 14 of adjusting, the first node 2 adjusts said one or more communication parameters 7 also on the basis of the at least one radio metric RM determined by the first node 2, e.g. as explained above with respect to the received radio metric/s RM determined by the second node 3.

Again, many combinations of determining one or more radio metrics RM of said group G in step 11, determining the same or different one or more radio metrics RM of said group G in step 15, and adjusting one or more communication parameters 7 (i - v) in step 14 on the basis of the determined radio metrics RM are possible. For example, when the second node 3 determines a high local transmit power T in step 11 and the first node 2 determines a low received signal strength R in step 15, the first node 2 may adjust the communication parameter/s 7 by removing the respective frequency channel Chⱼ from the set S in step 14. Alternatively or additionally, when the second node 3 determines a high local transmit power T in step 11 and the first node 2 determines a high receive signal strength R in step 15, the first node 2 may adjust the communication parameter/s 7 by decreasing the transmit power T of the second node 3 and/or of the first node 2 in step 14.

The first and second nodes 2, 3 may determine the respective at least one radio metric RM for one and the same ("common") subset SS₁ (Fig. 2) of frequency channels Chⱼ of the set S, i.e., each for the same frequency channels Chⱼ. Alternatively, the first and second nodes 2, 3 may determine the respective at least one radio metric RM for different subsets SS₁, SS₂ (Fig. 2) of frequency channels Chⱼ of the set S, i.e. for different frequency channels Chⱼ. For example, the first and second nodes 2, 3 may determine the radio metrics RM alternatingly in consecutive communication intervals CIᵢ and, thereby, share the effort to probe the frequency spectrum.

The one or more communication parameters 7 may be adjusted for several frequency channels Chⱼ one by one, e.g., after or during each communication interval CIᵢ. In some embodiments however, the one or more communication parameters 7 are adjusted for several frequency channels Chⱼ together, sometimes even for one or more frequency channels Chⱼ for which the at least one radio metric RM has not been determined (recently or at all), e.g., for one or more frequency channels Chⱼ next to a frequency channel Chⱼ with a particularly good or bad quality.

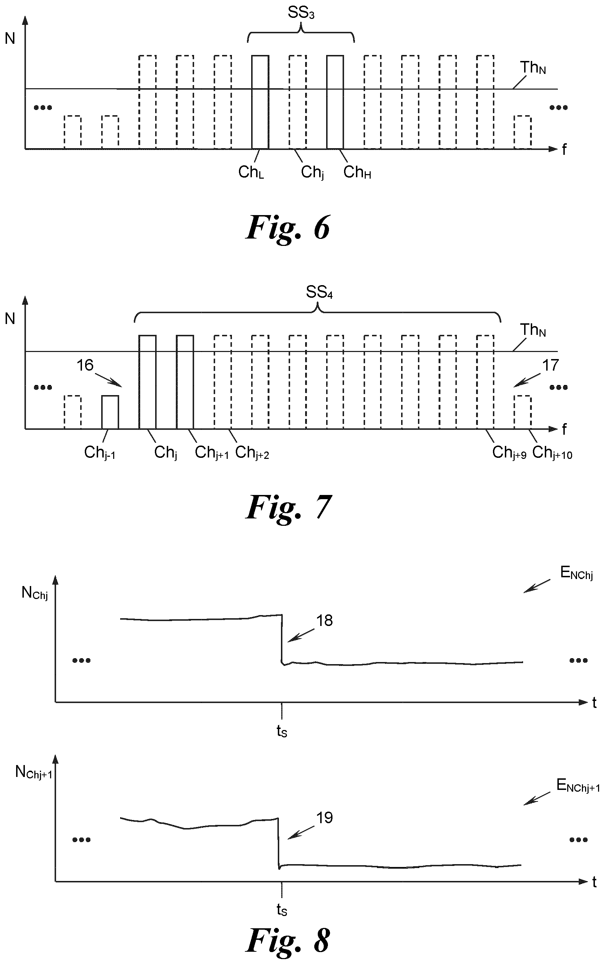

With reference to Figs. 6 and 7, exemplary embodiments utilising an interpolation (Fig. 6) or extrapolation (Fig. 7) of the radio metric RM for determining and adjusting in steps 11 and 14 (and optionally in step 15) shall be described.

In a first exemplary embodiment shown in Fig. 6, the second node 3 determines the at least one radio metric RM (here: the local noise level N) in step 11 for a lowest frequency channel Ch_{L} and for a highest frequency channel Ch_{H} (shown in continuous lines) of a subset SS₃ of the set S and not for other frequency channels Chⱼ (shown in dashed lines in Fig. 6) of the subset SS₃. The subset SS₃ is comprised of at least three and at most ten neighbouring frequency channels Chⱼ of the set S (here: of three neighbouring frequency channels Chⱼ of the set S). Alternatively or additionally, the radio metric RM for one of the lowest and highest frequency channel Ch_{L}, Ch_{H} may be determined by the first node 2 in optional step 15. In said step 14 of adjusting, the first node 2 evaluates whether the determined radio metrics RM for the lowest and highest frequency channels Ch_{L}, Ch_{H} of the subset SS₃ are similar (here: both above a noise level threshold Th_{N}), e.g. as described below, and, if so, adjusts the one or more communication parameter 7 for all the frequency channels Chⱼ of said subset SS₃ in the same way, e.g., as described in the examples above. Thereby, the radio metric RM is assumed to be similar ("interpolated") for all frequency channels Chⱼ between the lowest and highest frequency channels Ch_{L}, Ch_{H}.

In a second exemplary embodiment shown in Fig. 7, the second node 3 determines the at least one radio metric RM (here: again the local noise level N) in step 11 for three neighbouring frequency channels Chⱼ₋₁, Chⱼ, Chⱼ₊₁ (shown in continuous lines) and not for adjacent frequency channels (shown in dashed lines). Alternatively or additionally, the radio metric RM for one or two of the three neighbouring frequency channels Chⱼ₋₁, Chⱼ, Chⱼ₊₁ may be determined by the first node 2 in optional step 15. Two neighbouring frequency channels Chⱼ, Chⱼ₊₁ of these neighbouring frequency channels Chⱼ₋₁, Chⱼ, Chⱼ₊₁ are included in a subset SS₄ of at least three and at most ten neighbouring frequency channels Chⱼ of the set S (here: of ten neighbouring frequency channels Chⱼ) and the third frequency channel Chⱼ₋₁ of these neighbouring frequency channels Chⱼ₋₁, Chⱼ, Chⱼ₊₁ is not included in this subset SS₄. Then, in said step 14 of adjusting, the first node 2 evaluates whether the determined radio metrics RM for said two neighbouring frequency channels Chⱼ, Chⱼ₊₁ are similar to one another (here: above or below the noise level threshold Th_{N}) and not similar to the third frequency channel Chⱼ₋₁ (here: below or above the noise level threshold Th_{N}), e.g., as described below, and, if so, adjusts the communication parameter 7 for all the frequency channels Chⱼ of said subset SS₄ in the same way, e.g. as described above.

Thereby, a substantial shift 16 in the determined values of the radio metric RM between the third frequency channel Chⱼ₋₁ (the one outside the subset SS₄) and the neighbouring two frequency channels Chⱼ, Chⱼ₊₁ (inside the subset SS₄) is detected. Moreover, it is assumed, that the shift 16 marks the edge of a broadband interference, e.g., caused by the nearby WIFI-device 5 (Fig. 1) and that the interference is similar for all frequency channels Chⱼ in the subset SS₄. Thus, the radio metric RM is extrapolated for the frequency channels Chⱼ₊₂ - Chⱼ₊₉.

Alternatively, the lower frequency channels Chⱼ₋₁ and Chⱼ may be included in said subset SS₄ and the higher frequency channel Chⱼ₊₁ may lie outside the subset SS₄, such that, other than shown in the example of Fig. 7, the subset SS₄ would extend from frequency channels Chⱼ and Chⱼ₋₁ to the left. When, in this case, detecting a shift 17 between the frequency channels Chⱼ₋₁ and Chⱼ, the extrapolation would be in the other direction of the frequency spectrum, i.e. to the left in Fig. 7.

For radio metrics RM different from the noise level N the shifts 16, 17 may be a downwards shift, e.g., when the radio metric RM is the received signal strength R, to detect the edge of broadband interference.

In both exemplary embodiments, the number of frequency channels Chⱼ in the respective subset SS₃, SS₄ may be predetermined, e.g., being set to three, four, five, six, etc., or determined by the first node 2 on the fly, e.g., by identifying an interfering device and its channel width on the basis of its communication behaviour, e.g., on the basis of data packet lengths, data packet timing or the like.

The similarity of the determined radio metrics RM for respective two frequency channels Chⱼ, e.g. for the lowest and highest frequency channels Ch_{L}, Ch_{H} of the subset SS₃ in Fig. 6 or the two frequency channels Chⱼ, Chⱼ₊₁ of the subset SS4 in Fig. 7, may be evaluated in many ways, e.g., according to one of the following two variants.

In an exemplary first variant which is shown in Figs. 6 and 7, the first node 2 evaluates whether the determined local noise levels N exceed a predetermined noise level threshold value Th_{N} or not. Thereby, high amplitude broadband noise, e.g., as caused by the nearby WI-FI device 5, is identified.

In a second variant depicted in Fig. 8 the evolution E of the local noise level N is determined over time for the two frequency channels Chⱼ, Chⱼ₊₁. In the upper diagram of Fig. 8, the evolution E_{NChj} of the local noise level N_{Chj} in frequency channel Chⱼ is depicted and, in the lower diagram, the evolution E_{NChj+1} of the local noise level N_{Chj+1} in frequency channel Chⱼ₊₁. Then, in step 14 of adjusting, the first node 2 evaluates whether the evolutions E_{NChj}, E_{NChj+1} of the local noise levels N_{Chj}, N_{Chj+1} are similar over time. To assess this similarity over time, any measure derived from the evolutions E_{NChj}, E_{NChj+1} may be applied, e.g., a cross-correlation, a summation or integration of differences, a (summed) difference of a number, height and/or timing of steps 18, 19, of minima and/or of maxima etc.

In the example of Fig. 8, the evolutions E_{NChj}, E_{NChj+1} of the local noise levels N_{Chj}, N_{Chj+1} are evaluated to be similar as the steps 18, 19 occur approximately at the same time tₛ.

Of course, these two variants may also be employed when a different radio metric RM other than the noise level N is determined. Hence, the similarity of the determined radio metric RM for two frequency channels Chⱼ may be evaluated on the basis of a threshold or on the basis of their respective evolutions over time.

While, for simplicity reasons, Fig. 1 shows a BLE communication network 1 with only two nodes 2, 3, the BLE network 1 may have more nodes, e.g., three, four, five or more. Accordingly, the method 9 of Fig. 5 may be carried out between any two nodes in such a multi-node BLE communication network 1. For example, local radio metrics RM may be transmitted to and received by the first node 2 and one or more communication parameters 7 may be adjusted for more than one BLE link as described above.

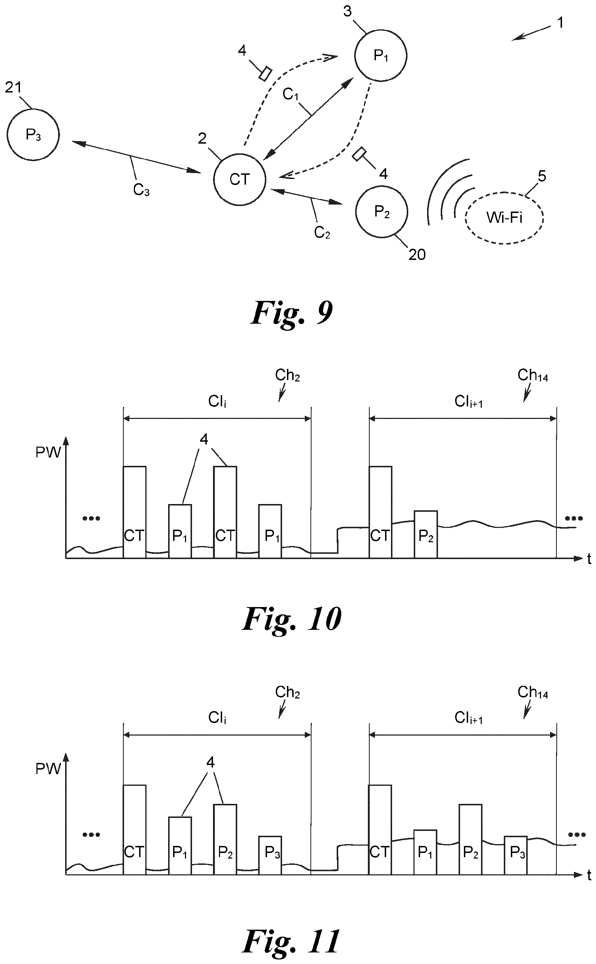

Fig. 9 depicts the BLE communication network 1 with a third node 20 (here: a peripheral node P₂) which communicates with the first node 2 (here: the central node CT) via a second BLE link C₂ and a fourth node 21 (here: a third peripheral node P₃) which communicates with the first node 2 via a third BLE link C₃.

Figs. 10 and 11 show two exemplary communication scenarios for the BLE communication network 1 of Fig. 9 by means of the local signal strength PW in the first node 2 over time for two successive communication intervals CIᵢ, CIᵢ₊₁. In the one-to-one communication scenario of Fig. 10, the first node 2 communicates in each of successive communication intervals CIᵢ, CIᵢ₊₁ with a different one of the other nodes 3, 20, 21. Hence, in each communication interval CIᵢ one single BLE link C₁, C₂, C₃ is used to exchange data packets 4.

In the broadcast scenario of Fig. 11, the first node 2 communicates in each of successive communication intervals CIᵢ, CIᵢ₊₁ with all other nodes 3, 20, 21. Hence, in each communication interval CIᵢ all three BLE links C₁, C₂, C₃ are used to exchange data packets 4. One type of such a broadcast scenario is known as "Periodic Advertising with Responses (PAwR)".

With reference to Figs. 9 and 12, a second embodiment of the present method 9 shall be described. In this embodiment, knowledge on spatial proximity between nodes (here: the second and third nodes 3, 20) is utilised for a common adjustment of the communication parameter/s 7 for the respective BLE links (here: the first and second BLE links C₁, C₂). It is noted that the embodiments, variants and examples described above with reference to Fig. 5 may be combined with the embodiments, variants and examples described below with reference to Fig. 12.

The method 9 of Fig. 12 comprises above-mentioned steps 11 - 14 and optionally steps 10 and 15 and further optionally a seventh step 22 of establishing the second BLE link C₂ between the first and third nodes 2, 20.

In step 14 of adjusting, spatial proximity between the second and third nodes 3, 20 is taken into account in this embodiment. To this end, the first node 2 evaluates whether the second and third nodes 3, 20 fulfil a given proximity criterion PC, i.e. a criterion of mutual proximity, in a decision 14' and, if so, adjusts the communication parameter 7 for both the first and second BLE links C₁, C₂ together in the same way (left branch 'y' of decision 14'), e.g. both communication parameters 7 as described above for the first BLE link C₁. When the proximity criterion PC is not fulfilled (right branch 'n' of decision 14'), the first node 2 adjusts the communication parameter 7 for the first and second BLE links C₁, C₂ separately, most often differently.

It shall be noted that in many embodiments (albeit not necessarily), the third node 20 also determines at least one radio metric RM from said group G in an optional eighth step 23 prior to step 14, however, independent of steps 11 and 12 performed by the second node 3, i.e. at least one of said radio metrics RM: local received signal strength R, local noise level N, local transmit power T, local data packet timing t_{dp}, local data packet length L and local data packet error rate E. Therein, the term "local" refers to the third node 20. The third node 20 transmits the determined at least one radio metric RM to the first node 2 in an optional ninth step 24. The first node 2 receives the at least one radio metric RM transmitted by the third node 20 in step 13 and adjusts the communication parameter 7 for the first and second BLE links C₁, C₂ also on the basis of the at least one radio metric RM received from the third node 20 in step 14. Also in this case, the first, second and third nodes 2, 3, 20 may determine the same or different radio metrics RM for the same or different frequency channels Chⱼ.

The proximity criterion PC utilised in decision 14' may be any criterion defining a spatial proximity, e.g., whether the second and third nodes 3, 20 are within a certain distance from one another, are each within a certain distance from the first node 2, are each within a certain distance from a further node 21 or from another wireless device 5, whether they are neighbouring nodes or whether they are both in a certain region, etc. Accordingly, the first node 2 may evaluate the fulfilment of the proximity criterion PC in many ways and based on any explicit or implicit spatial information, be it given or determined by one or more nodes, e.g., by means of a localisation algorithm such as trilateration, multilateration, RSSI-based localisation, angle of arrival, channel sounding, etc., by means of a neural network trained on computing distances or positions from determined radio metrics RM, or the like.

In a first exemplary variant of proximity evaluation, the second and third nodes 3, 20 each determine and communicate their position to the first node 2, which, in turn, evaluates, whether they are each in a certain region, within a certain distance from one another, or the like.

In a second exemplary variant, the local noise level N is utilised to assess the proximity of the second and third nodes 3, 20. Thereby, in said step 11, 23 of determining, each of the second and third nodes 3, 20 determines the local noise level N, and, in said step 14 of adjusting, the first node 2 evaluates whether the noise levels N determined by the second and third nodes 3, 20 are similar and, if so, concludes that the proximity criterion PC is fulfilled in decision 14'.

Figs. 13 and 14 depict two variants of evaluating whether the local noise levels N are similar.

In the variant of Fig. 13, the second and third nodes 3, 20 determine, in said steps 11, 23 of determining, the evolutions E_{N2}, E_{N3} of the local noise levels N (here: denoted by the node number 'N₂', 'N₃') over time, e.g., for the same frequency channel Chⱼ, or for neighbouring or nearby frequency channels Chⱼ, Chⱼ₊ₙ, e.g., with n < 5. In said step 14 of adjusting, the first node 2 evaluates whether the evolutions E_{N2}, E_{N3} of the local noise levels N₂, N₃ over time are similar, e.g. as described above with reference to Fig. 8, and, if so, concludes that the proximity criterion PC is fulfilled in decision 14'.

In the example of Fig. 13, the evolutions E_{N2}, E_{N3} of the local noise levels N₂, N₃ are evaluated to be similar as maxima M₂, M₃ occur approximately at the same time t_{M}.

In the variant of Fig. 14, the second and third nodes 3, 20 determine, in said steps 11, 23 of determining, the local noise levels N₂, N₃ for a same subset SS₅ of at least two, for example three, four or five, frequency channels Chⱼ of the set S. In said step 14 of adjusting, the first node 2 evaluates whether the local noise levels N₂, N₃ for the same subset SS₅ of frequency channels Chⱼ are similar and, if so, concludes that the proximity criterion PC is fulfilled in decision 14'.

Again, any similarity measure may be employed, e.g., a cross-correlation, a summation of differences, a (summed) difference of a number, height and/or timing of steps, of minima and/or of maxima etc.

In a third exemplary variant depicted by steps 25 - 27 in Fig. 12, a data packet 4 transmitted by the third node 20 and received by the second node 3 is utilised to assess the proximity of the second and third nodes 3, 20. To this end, in a tenth step 25, the second node 3 determines a local received signal strength R and/or a local data packet timing t_{dp} of a data packet 4 transmitted by the third node 20. The data packet 4 may either stem from a BLE communication between the second and third nodes 3, 20 or from a BLE communication of the third node 20 with a further node, e.g. with the first node 2, i.e. the second node 3 may but need not be the intended addressee of the data packet 4.

In a subsequent eleventh step 26, the second node 3 identifies a proximity indicator PI from the received signal strength R and/or the local data packet timing t_{dp}. The proximity indicator PI may either be the received signal strength R or the local data packet timing t_{dp} itself or a measure derived therefrom, e.g., a signal time-of-flight, a distance, a binary flag indicating a fulfilment of the proximity criterion PC, etc.

In a twelfth step 27, the second node 3 transmits the determined proximity indicator PI to the first node 2. The first node 2 receives the proximity indicator PI in said step 13 and evaluates whether the proximity indicator PI indicates that the proximity criterion PC is fulfilled in said decision 14' and, if so, adjusts the communication parameter/s 7 for the second and third nodes 3, 20 in the same way in step 14.

It shall be understood that the evaluation by the first node 2 depends on the specific proximity indicator PI chosen and may, e.g., include comparing the received signal strength R with a received signal strength threshold value, subtracting the received data packet timing t_{dp} from the known or identified transmit data packet timing of that data packet 4 to obtain a signal time-of-flight or distance measure and comparing the signal time-of-flight or distance measure with a respective threshold value, reading the binary flag, etc.

Alternatively or additionally, a data packet 4 transmitted by the second node 3 and received by the third node 20 may be utilised to assess the proximity of the second and third nodes 3, 20 as described above. Accordingly, steps 25 - 27 may alternatively or additionally be carried out with interchanged roles of the second and third nodes 3, 20.

It is noted that whenever the local noise level N is determined, e.g., in step 11, 15 or 23, this may be done in at least one BLE frame spacing ("FS") between two consecutive data packets 4 of one communication interval CIᵢ, for instance shown in Fig. 3. The BLE FS may, e.g., be one of a so-called "Inter Frame Spacing/Space", "Minimum AUX Frame Spacing/Space" and "Minimum Subevent Spacing/Space".

In general, the steps of the method 9 may be carried out in any order as long as one step does not depend on the result of another step. Hence, the enumeration "first", "second", etc. does not imply a specific order or the presence of certain steps.

The invention is not restricted to the specific embodiments described above but encompasses all variants, modifications and combinations thereof that fall within the scope of the appended claims.

## Claims

1. A method for adjusting a communication parameter (7) in a Bluetooth Low Energy, BLE, communication network (1) having a first node (2) and a second node (3) communicating via a first BLE link (C₁), the communication parameter (7) being one of a transmit power (T), a data packet timing (t_{dp}), a maximum data packet length (Lₘₐₓ), a set (S) of frequency channels (Chⱼ) for frequency hopping and a physical modulation (PHY), the method (9) comprising:
by the second node (3), determining (11) at least one radio metric (RM) from a group (G) consisting of a local received signal strength (R), a local noise level (N), a local transmit power (T), a local data packet timing (t_{dp}), a local data packet length (L) and a local data packet error rate (E), and transmitting (12) the determined at least one radio metric (RM) to the first node (2); and
by the first node (2), receiving (13) the transmitted at least one radio metric (RM) and adjusting (14) the communication parameter (7) for the first BLE link (C₁) on the basis of the received at least one radio metric (RM).

2. The method according to claim 1, further comprising:
by the first node (2), determining (15) at least one radio metric (RM) from said group (G);
wherein, in said step of adjusting (14), the first node (2) adjusts the communication parameter (7) also on the basis of the at least one radio metric (RM) determined by the first node (2).

3. The method according to claim 2, wherein, in said step of determining (11, 15), the first and second nodes (2, 3) determine the respective at least one radio metric (RM) for one and the same subset (SS₁) of frequency channels (Chⱼ) of the set (S).

4. The method according to claim 2, wherein, in said step of determining (11, 15), the first and second nodes (2, 3) determine the respective at least one radio metric (RM) for different subsets (SS₁, SS₂) of frequency channels (Chⱼ) of the set (S).

5. The method according to any one of claims 1 to 4, wherein, in said step of determining (11, 15, 23), the at least one radio metric (RM) is determined for a lowest and a highest frequency channel (Ch_{L}, Ch_{H}) of a subset (SS₃) of at least three and at most ten neighbouring frequency channels (Chⱼ) of the set (S), and
wherein, in said step of adjusting (14), the first node (2) evaluates whether the determined radio metrics (RM) for the lowest and highest frequency channels (Ch_{L}, Ch_{H}) are similar and, if so, adjusts the communication parameter (7) for all the frequency channels (Chⱼ) of said subset (SS₃) in the same way.

6. The method according to any one of claims 1 to 5, wherein, in said step of determining (11, 15, 23), the at least one radio metric (RM) is determined for three neighbouring frequency channels (Chⱼ₋₁, Chⱼ, Chⱼ₊₁) two frequency channels (Ch_{j,} Chⱼ₊₁) of which being included in a subset (SS₄) of at least three and at most ten neighbouring frequency channels (Chⱼ - Chⱼ₊₉) of the set (S) and a third frequency channel (Chⱼ₋₁) of which not being included in this subset (SS₄), and
wherein, in said step of adjusting (14), the first node (2) evaluates whether the determined radio metrics (RM) for said two neighbouring frequency channels (Chⱼ, Chⱼ₊₁) are similar to one another and not similar to the third frequency channel (Chⱼ₋₁) and, if so, adjusts the communication parameter (7) for all the frequency channels (Chⱼ) of said subset (SS₄) in the same way.

7. The method according to claim 5 or 6, wherein, in said step of determining (11, 15), the local noise level (N) is determined, and
wherein, in said step of adjusting (14), the first node (2) evaluates whether the determined radio metrics (RM) for the respective two frequency channels (Ch_{L}, Ch_{H}; Chⱼ, Chⱼ₊₁) are similar by evaluating whether the local noise levels (N) determined for the respective two frequency channels (Ch_{L}, Ch_{H}; Chⱼ, Chⱼ₊₁) exceed a predetermined noise level threshold value (Th_{N}).

8. The method according to claim 5 or 6, wherein, in said step of determining (11, 15), the evolution (E_{NChj}, E_{NChj+1}) of the local noise level (N_{Chj}, N_{Chj+1}) over time is determined, and
wherein, in said step of adjusting (14), the first node (2) evaluates whether the determined radio metrics (RM) for the respective two frequency channels (Ch_{L}, Ch_{H}; Chⱼ, Chⱼ₊₁) are similar by evaluating whether the evolutions (E_{NChj}, E_{NChj+1}) of the local noise levels (N_{Chj}, N_{Chj+1}) over time determined for the respective two frequency channels (Ch_{L}, Ch_{H}; Chⱼ, Chⱼ₊₁) are similar.

9. The method according to any one of claims 1 to 8, wherein, in said step of determining (11, 15, 23), the local noise level (N) is determined in at least one BLE Frame Spacing (FS) .

10. The method according to any one of claims 1 to 9, wherein the BLE communication network (1) further has a third node (20) communicating with the first node (2) via a second BLE link (C₂),
wherein, in said step of adjusting (14), the first node (2) evaluates (14') whether the second and third nodes (3, 20) fulfil a given proximity criterion (PC) and, if so, adjusts the communication parameter (7) for both the first and second BLE links (C₁, C₂) in the same way.

11. The method according to claim 10, further comprising:
by the third node (20), determining (23) at least one local radio metric (RM) from said group (G) and transmitting (24) the determined at least one radio metric (RM) to the first node (2) ;
wherein the first node (2), in said step of receiving (13), also receives the at least one radio metric (RM) transmitted by the third node (20) and, in said step of adjusting (14), adjusts the communication parameter (7) also on the basis of the at least one radio metric (RM) received from the third node (20).

12. The method according to claim 11, wherein, in said step of determining (11, 23), each of the second and third nodes (3, 20) determines the local noise level (N₂, N₃), and
wherein, in said step of adjusting (14), the first node (2) evaluates whether the local noise levels (N₂, N₃) determined by the second and third nodes (3, 20) are similar and, if so, concludes that the proximity criterion (PC) is fulfilled.

13. The method according to claim 12, wherein, in said step of determining (11, 23), the second and third nodes (3, 20) determine the evolution (E_{N2}, E_{N3}) of the local noise level (N₂, N₃) over time and/or the local noise level (N₂, N₃) for one and the same subset (SS₅) of at least two, preferably at least three, frequency channels (Chⱼ) of the set (S), and
wherein, in said step of adjusting (14), the first node (2) evaluates whether the evolutions (E_{N2}, E_{N3}) of the local noise levels (N₂, N₃) over time and/or the local noise levels (N₂, N₃) for said one and the same subset (SS₅) of frequency channels (Chⱼ) are similar and, if so, concludes that the proximity criterion (PC) is fulfilled.

14. The method according to claim 10 or 11, further comprising:
by one of the second and third nodes (3, 20), determining (25) a local received signal strength (R) and/or a local data packet timing (t_{dp}) of a data packet (4) transmitted by the other one of the second and third nodes (3, 20), identifying (26) a proximity indicator (PI) therefrom, and transmitting (27) the determined proximity indicator (PI) to the first node (2) ;
wherein, in said step of receiving (13), the first node (2) receives the proximity indicator (PI) and, in said step of adjusting (14), evaluates whether the proximity indicator (PI) indicates that the proximity criterion (PC) is fulfilled.

15. The method according to any one of claims 1 to 14, wherein the first node (2) is a central node and each other node (3, 20) is a peripheral node.

## Amended claims

### Amended claims in accordance with Rule 137(2) EPC.

1. A method for adjusting a communication parameter (7) in a Bluetooth Low Energy, BLE, communication network (1) having a first node (2) and a second node (3) communicating via a first BLE link (C₁), the communication parameter (7) being one of a transmit power (T), a data packet timing (t_{dp}), a maximum data packet length (Lₘₐₓ), a set (S) of frequency channels (Chⱼ) for frequency hopping and a physical modulation (PHY), the method (9) comprising:
by the second node (3), determining (11) at least one radio metric (RM) from a group (G) consisting of a local received signal strength (R), a local noise level (N), a local transmit power (T), a local data packet timing (t_{dp}), a local data packet length (L) and a local data packet error rate (E), and transmitting (12) the determined at least one radio metric (RM) to the first node (2); and
by the first node (2), receiving (13) the transmitted at least one radio metric (RM) and adjusting (14) the communication parameter (7) for the first BLE link (C₁) on the basis of the received at least one radio metric (RM),
**characterised in that** the BLE communication network (1) further has a third node (20) communicating with the first node (2) via a second BLE link (C₂), wherein, in said step of adjusting (14), the first node (2) evaluates (14') whether the second and third nodes (3, 20) fulfil a given proximity criterion (PC) and, if so, adjusts the communication parameter (7) for both the first and second BLE links (C₁, C₂) in the same way.

2. The method according to claim 1, further comprising:
by the first node (2), determining (15) at least one radio metric (RM) from said group (G);
wherein, in said step of adjusting (14), the first node (2) adjusts the communication parameter (7) also on the basis of the at least one radio metric (RM) determined by the first node (2).

3. The method according to claim 2, wherein, in said step of determining (11, 15), the first and second nodes (2, 3) determine the respective at least one radio metric (RM) for one and the same subset (SS₁) of frequency channels (Chⱼ) of the set (S).

4. The method according to claim 2, wherein, in said step of determining (11, 15), the first and second nodes (2, 3) determine the respective at least one radio metric (RM) for different subsets (SS₁, SS₂) of frequency channels (Chⱼ) of the set (S).

5. The method according to any one of claims 1 to 4, wherein, in said step of determining (11, 15, 23), the at least one radio metric (RM) is determined for a lowest and a highest frequency channel (Ch_{L}, Ch_{H}) of a subset (SS₃) of at least three and at most ten neighbouring frequency channels (Chⱼ) of the set (S), and
wherein, in said step of adjusting (14), the first node (2) evaluates whether the determined radio metrics (RM) for the lowest and highest frequency channels (Ch_{L}, Ch_{H}) are similar and, if so, adjusts the communication parameter (7) for all the frequency channels (Chⱼ) of said subset (SS₃) in the same way.

6. The method according to any one of claims 1 to 5, wherein, in said step of determining (11, 15, 23), the at least one radio metric (RM) is determined for three neighbouring frequency channels (Chⱼ₋₁, Chⱼ, Chⱼ₊₁) two frequency channels (Chⱼ, Chⱼ₊₁) of which being included in a subset (SS₄) of at least three and at most ten neighbouring frequency channels (Chⱼ - Chⱼ₊₉) of the set (S) and a third frequency channel (Chⱼ₋₁) of which not being included in this subset (SS₄), and
wherein, in said step of adjusting (14), the first node (2) evaluates whether the determined radio metrics (RM) for said two neighbouring frequency channels (Chⱼ, Chⱼ₊₁) are similar to one another and not similar to the third frequency channel (Chⱼ₋₁) and, if so, adjusts the communication parameter (7) for all the frequency channels (Chⱼ) of said subset (SS₄) in the same way.

7. The method according to claim 5 or 6, wherein, in said step of determining (11, 15), the local noise level (N) is determined, and
wherein, in said step of adjusting (14), the first node (2) evaluates whether the determined radio metrics (RM) for the respective two frequency channels (Ch_{L}, Ch_{H}; Chⱼ, Chⱼ₊₁) are similar by evaluating whether the local noise levels (N) determined for the respective two frequency channels (Ch_{L}, Ch_{H}; Chⱼ, Chⱼ₊₁) exceed a predetermined noise level threshold value (Th_{N}).

8. The method according to claim 5 or 6, wherein, in said step of determining (11, 15), the evolution (E_{NChj}, E_{NChj+1}) of the local noise level (N_{Chj}, N_{Chj+1}) over time is determined, and
wherein, in said step of adjusting (14), the first node (2) evaluates whether the determined radio metrics (RM) for the respective two frequency channels (Ch_{L}, Ch_{H}; Chⱼ, Chⱼ₊₁) are similar by evaluating whether the evolutions (E_{NChj}, E_{NChj+1}) of the local noise levels (N_{Chj}, N_{Chj+1}) over time determined for the respective two frequency channels (Ch_{L}, Ch_{H}; Chⱼ, Chⱼ₊₁) are similar.

9. The method according to any one of claims 1 to 8, wherein, in said step of determining (11, 15, 23), the local noise level (N) is determined in at least one BLE Frame Spacing (FS).

10. The method according to any one of claims 1 to 9, further comprising:
by the third node (20), determining (23) at least one local radio metric (RM) from said group (G) and transmitting (24) the determined at least one radio metric (RM) to the first node (2);
wherein the first node (2), in said step of receiving (13), also receives the at least one radio metric (RM) transmitted by the third node (20) and, in said step of adjusting (14), adjusts the communication parameter (7) also on the basis of the at least one radio metric (RM) received from the third node (20).

11. The method according to claim 10, wherein, in said step of determining (11, 23), each of the second and third nodes (3, 20) determines the local noise level (N₂, N₃), and
wherein, in said step of adjusting (14), the first node (2) evaluates whether the local noise levels (N₂, N₃) determined by the second and third nodes (3, 20) are similar and, if so, concludes that the proximity criterion (PC) is fulfilled.

12. The method according to claim 11, wherein, in said step of determining (11, 23), the second and third nodes (3, 20) determine the evolution (E_{N2}, E_{N3}) of the local noise level (N₂, N₃) over time and/or the local noise level (N₂, N₃) for one and the same subset (SS₅) of at least two, preferably at least three, frequency channels (Chⱼ) of the set (S), and
wherein, in said step of adjusting (14), the first node (2) evaluates whether the evolutions (E_{N2}, E_{N3}) of the local noise levels (N₂, N₃) over time and/or the local noise levels (N₂, N₃) for said one and the same subset (SS₅) of frequency channels (Chⱼ) are similar and, if so, concludes that the proximity criterion (PC) is fulfilled.

13. The method according to any one of claims 1 to 10, further comprising:
by one of the second and third nodes (3, 20), determining (25) a local received signal strength (R) and/or a local data packet timing (t_{dp}) of a data packet (4) transmitted by the other one of the second and third nodes (3, 20), identifying (26) a proximity indicator (PI) therefrom, and transmitting (27) the determined proximity indicator (PI) to the first node (2);
wherein, in said step of receiving (13), the first node (2) receives the proximity indicator (PI) and, in said step of adjusting (14), evaluates whether the proximity indicator (PI) indicates that the proximity criterion (PC) is fulfilled.

14. The method according to any one of claims 1 to 13, wherein the first node (2) is a central node and each other node (3, 20) is a peripheral node.
